# EUROPEAN PATENT APPLICATION

(11) **EP 4 589 504 A1**
(43) Date of publication of application: **23.07.2025**
(21) Application number: 23865039.4
(22) Date of filing: 30.06.2023
(51) Int. Cl.: G06Q 10/087, G06Q 30/0601, G06Q 50/04

(54) **ORDERING ASSISTANCE DEVICE, CHEMICAL ORDERING ASSISTANCE SYSTEM, AND CHEMICAL ORDERING ASSISTANCE METHOD**

(30) Priority: 15.09.2022 JP 2022147070
(71) Applicant: Kurita Water Industries Ltd., Tokyo 164-0001 (JP)
(72) Inventor: FUKUE Susumu, Tokyo 164-0001 (JP); OOKIDO Katsutoshi, Tokyo 164-0001 (JP); TOKOSHIMA Hiroto, Tokyo 164-0001 (JP)
(74) Representative: Carpmaels & Ransford LLP
(86) International application number: PCT/JP2023/024457
(87) International publication number: WO 2024/057677

(57) **Abstract**

This ordering assistance device comprises: a communication unit that receives, from one or more water treatment facilities comprising a plurality of chemical tanks, liquid level measurement data representing the remaining amount of liquid in each of the plurality of chemical tanks, which store a plurality of types of chemicals used for purifying water; a prediction unit that predicts the remaining amount of liquid at a plurality of time points within a prescribed period for each of the plurality of chemical tanks, on the basis of the received measurement data; an ordering plan creation unit that, on the basis of the prediction results for the remaining amounts of liquid at the plurality of time points within the prescribed period for each of the plurality of chemical tanks, creates an ordering plan that includes information about the ordering company for each of the plurality of types of chemical, the delivery date and time, and the delivery amount; and a provision unit that provides, to a request source, information about the ordering plan created by the ordering plan creation unit.

## Description

### Technical Field

The invention relates to an ordering assistance device, a chemical ordering assistance system and a chemical ordering assistance method.
This application claims priority based on Japanese Patent Application No. 2022-147070 filed in Japan on September 15, 2022, the contents of which are incorporated herein by reference.

### Related Art

Conventionally, in water treatment facilities, plans for replenishing chemicals in tanks are made based on the information about the remaining amounts of chemicals stored in tanks used for water treatment (for example, see Patent Documents 1 to 3).

### Citation List

### Patent Document(s)

Patent Document 1: Japanese Patent No. S58-115204
Patent Document 2: Japanese Patent No. S62-95696
Patent Document 3: Japanese Patent No. H02-98713

### SUMMARY OF INVENTION

### Issues to be solved

In water treatment, if chemical injection stops, it directly leads to water quality deterioration. Therefore, it is necessary to monitor the liquid level in the tank and plan replenishment systematically to prevent the tank from becoming empty. However, there are several issues with liquid level management for chemical replenishment. The first issue is that the usage and storage amount (≈ tank capacity) differ for each chemical. Therefore, chemical arrangement is required according to the usage of each chemical. The second issue is that in the case of a large tank capacity, chemical delivery by a large chemical delivery vehicle (tanker) becomes necessary, and it requires arrangement several days to several weeks in advance. The third issue is that the chemical supplier for arrangement differs for each chemical. The fourth issue is that if chemical delivery exceeding the tank capacity is arranged, additional costs are incurred for the excess amount.

The Patent Documents 1 to 3 mentioned above do not realize the creation of a replenishment plan that takes into account all four issues described above. Currently, dedicated technicians carry out chemical prediction to arrangement preparation, but doing everything manually is time-consuming. Therefore, a technology that can more efficiently create a replenishment plan considering all four issues mentioned above is desired.

In view of the above circumstances, the invention aims to provide a technology that can more efficiently assist in ordering chemicals used for water treatment.

### Solution to Problem

A first aspect of the invention provides an ordering assistance device that includes: one or more water treatment facilities including multiple chemical tanks storing multiple types of chemicals used for water purification; a communication unit that receives, from the one or more water treatment facilities, measurement data of a liquid level representing a remaining amount of each of the chemical tanks; a prediction unit that predicts the remaining amounts at multiple time points within a prescribed period for each of the chemical tanks, based on the measurement data that are received; an ordering plan creation unit that, based on prediction results for the remaining amounts at the time points within the prescribed period for each of the chemical tanks, creates an ordering plan that includes information about an ordering company, a delivery date and time, and a delivery amount for each of the types of chemicals; and a supply unit that provides, to a request source, information about the ordering plan created by the ordering plan creation unit.

According to a second aspect of the invention, in the ordering assistance device of the first aspect, information of an installation area is associated with each of the chemical tanks, and the ordering plan creation unit creates the ordering plan so that, at a time of creating the ordering plan, in a case where replenishments of chemicals of different types occur in a same area and a same time slot, which chemical to add to the ordering plan is determined by prioritizing based on a priority set in advance and the replenishments of the chemicals of different types do not occur in the same area and the same time slot.

According to a third aspect of the invention, in the ordering assistance device of the first or second aspect, child tank information representing that, in a chemical tank, a chemical is distributed and replenished from another chemical tank is associated with one or some of the chemical tanks, and in a case of predicting the remaining amounts at the time points within the prescribed period for the chemical tank associated with the child tank information, the predicting unit predicts the remaining amounts at the time points within the prescribed period for the chemical tank associated with the child tank information based on the measurement data obtained from the chemical tank associated with the child tank information and the measurement data obtained from a chemical tank indicated by the child information.

According to a fourth aspect of the invention, in the ordering assistance device of any one of the first to third aspects, the ordering plan creation unit creates the ordering plan, so that for a chemical for which chemical replenishments of multiple times within a same day are required, a predetermined time is set between an interval of the chemical replenishments.

According to a fifth aspect of the invention, in the ordering assistance device of any one of the first to fourth aspects, the ordering plan creation unit creates the ordering plan, so that, for a chemical requiring time for a process other than time required for replenishment, chemical delivery is not performed when the process other than the time required for replenishment is being performed.

According to a sixth aspect of the invention, in the ordering assistance device of any one of the first to fifth aspects, after predicting the remaining amounts at the time points within the prescribed period for each of the chemical tanks, in a case of receiving an instruction of changing a prediction value of the remaining amount at an arbitrary time point in a specific period within the prescribed period, the prediction unit predicts the remaining amount following the specific period by taking into consideration the prediction value that is changed.

A seventh aspect of the invention provides a chemical ordering assistance system that includes: one or more water treatment facilities including multiple chemical tanks storing multiple types of chemicals used for water purification; a communication unit that receives, from the one or more water treatment facilities, measurement data of a liquid level representing a remaining amount of each of the chemical tanks; a prediction unit that predicts the remaining amounts at multiple time points within a prescribed period for each of the chemical tanks, based on the measurement data that are received; an ordering plan creation unit that, based on prediction results for the remaining amounts at the time points within the prescribed period for each of the chemical tanks, creates an ordering plan that includes information about an ordering company, a delivery date and time, and a delivery amount for each of the types of chemicals; and a supply unit that provides, to a request source, information about the ordering plan created by the ordering plan creation unit.

An eighth aspect of the invention provides a chemical ordering assistance method that includes: receiving, from one or more water treatment facilities including multiple chemical tanks, measurement data of a liquid level representing a remaining amount of each of the chemical tanks, the chemical tanks storing multiple types of chemicals used for water purification; predicting the remaining amounts at multiple time points within a prescribed period for each of the chemical tanks, based on the measurement data that are received; based on prediction results for the remaining amounts at the time points within the prescribed period for each of the chemical tanks, creating an ordering plan for the types of chemicals; and providing, to a request source, information about the ordering plan that is created.

### Effects of Invention

According to the invention, it is possible to more efficiently assist in ordering chemicals used for water treatment.

### BRIEF DESCRIPTION OF DRAWINGS

[FIG. 1] A diagram for illustrating an overview of a chemical ordering assistance system of the invention.
[FIG. 2] A diagram illustrating a configuration example of the chemical ordering assistance system according to an embodiment.
[FIG. 3] A diagram illustrating a configuration example of a user device according to an embodiment.
[FIG. 4] A diagram illustrating a configuration example of an ordering assistance device according to an embodiment.
[FIG. 5] A diagram illustrating an example of a tank DB according to an embodiment.
[FIG. 6] A diagram illustrating an example of an operator DB according to an embodiment.
[FIG. 7] A diagram illustrating an example of a chemical-operator DB according to an embodiment.
[FIG. 8] A diagram illustrating an example of a display image displayed on a display unit of a user device at the time of accessing the ordering assistance device.
[FIG. 9] A diagram illustrating an example of a display image for confirming a remaining amount prediction.
[FIG. 10] A diagram illustrating an example of a display image for manually changing a prediction value.
[FIG. 11] A diagram illustrating an example of a display image for confirming a remaining amount prediction.
[FIG. 12] A diagram illustrating an example of a display image for confirming a chemical reception schedule.
[FIG. 13] A diagram illustrating an example of a display image for confirming an alert.
[FIG. 14] A sequence diagram illustrating a processing flow in the chemical ordering assistance system according to the embodiment.
[FIG. 15] A sequence diagram illustrating a processing flow in the chemical ordering assistance system according to the embodiment.
[FIG. 16] A flowchart illustrating the flow of an ordering plan creation process performed by the ordering assistance device according to the embodiment.

### DESCRIPTION OF EMBODIMENTS

The following describes an embodiment of the invention with reference to the drawings.

### (Overview)

The chemical ordering assistance system of the invention is a system aiming at monitoring the liquid levels of chemical tanks storing multiple chemicals used for water purification in a water treatment facility, and assisting with a chemical ordering plan according to the fluctuation history of liquid levels. Here, the water treatment facility refers to various water treatment facilities that perform, for example, wastewater treatment to bring wastewater to a water quality level suitable for discharge, or production of pure water or ultrapure water containing almost no impurities from water sources (such as well water or industrial water). It is particularly suitable for water treatment facilities that use multiple chemicals and consume large amounts of chemicals. The multiple chemicals used for water purification include, for example, industrial chemicals such as caustic soda, sulfuric acid, sodium hypochlorite, and specialty chemicals such as organic flocculants.

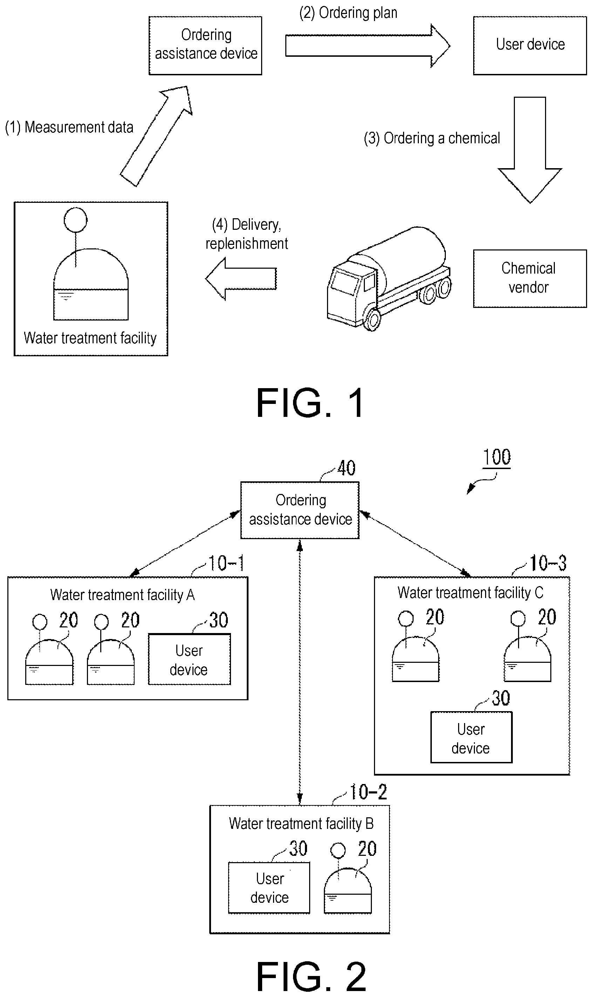

Next, with reference to FIG. 1, an example of the sequence of the chemical ordering assistance system of the invention will be described. FIG. 1 is a diagram for illustrating an overview of a chemical ordering assistance system of the invention. In one or more water treatment facilities, the liquid level of the chemical tank installed within the water treatment facility is measured by a liquid level meter (such as an ultrasonic or differential pressure level meter). The liquid level meter transmits measurement data indicating the measurement result to the ordering assistance device ((1) of FIG. 1). The ordering assistance device collects data on the liquid level of the chemical tank installed in each water treatment facility from each water treatment facility and accumulates the data in a database. The liquid level meter may also collect the results obtained by observing a liquid level gauge on the side surface of the chemical tank at regular time intervals.

The ordering assistance device uses accumulated time series data of the liquid levels over the past few days (for example, 3 to 30 days) to estimate the daily usage for each chemical tank in each water treatment facility (for example, the average daily usage over 3 to 30 days). The ordering assistance device predicts how the remaining amount in each chemical tank of each water treatment facility may change based on the estimated daily usage. The ordering assistance device creates an ordering plan by using the prediction result of the remaining amount in each chemical tank. For example, in the case where the ordering assistance device determines that the remaining amounts in multiple chemical tanks are low and replenishment is necessary based on the prediction result of the remaining amount in each chemical tank, and in the case where the creation result of the ordering plan for replenishing multiple types of chemicals are for the same area and time slot, the ordering assistance device creates an ordering plan by specifying the order based on a predetermined priority, so that the reception of large chemical delivery vehicles (tankers) does not overlap or no congestion is caused. In this way, the ordering assistance device creates an ordering plan by taking into account not only the remaining amount in one chemical tank but also the prediction result of the remaining amounts in multiple chemical tanks installed in one water treatment facility. The ordering plan includes information such as the delivery operator, the chemical to be delivered, the scheduled delivery date and time, and the delivery amount.

The ordering assistance device sends the created ordering plan to a user device operated by an on-site chemical administrator ((2) of FIG. 1). In addition to the ordering plan, the ordering assistance device also sends information indicating the prediction result of the remaining amount in each chemical tank. Hereinafter, the prediction result of the remaining amount in each chemical tank and the ordering plan are collectively referred to as "assistance information". The on-site chemical administrator operates the user device to confirm the ordering plan sent from the ordering assistance device, and according to the ordering plan, creates a chemical arrangement request form, and orders chemicals from the chemical vendors for respective chemicals ((3) of FIG. 1). The chemical vendor delivers the chemical to the target water treatment facility by using a large chemical delivery vehicle (tanker) on the delivery date and time as indicated in the arrangement request form, and replenishes the chemical in the chemical tank ((4) of FIG. 1). Accordingly, the assistance in ordering chemicals used in water treatment can be carried out more efficiently. The following describes the specific configuration for realizing the above process.

### (Details)

FIG. 2 is a diagram illustrating a configuration example of the chemical ordering assistance system 100 according to an embodiment. The chemical ordering assistance system 100 includes one or more water treatment facilities 10 and an ordering assistance device 40. The water treatment facilities 10 and the ordering assistance device 40 are connected by wired or wireless means. In FIG. 2, the water treatment facilities 10 are shown as a water treatment facility A-10-1, a water treatment facility B-10-2, and a water treatment facility C-10-3, but the number of water treatment facilities 10 is not particularly limited. In the following description, when the water treatment facility A-10-1, the water treatment facility B-10-2, and the water treatment facility C-10-3 are not specifically distinguished, the water treatment facilities are simply referred to as water treatment facilities 10.

The water treatment facility 10 is a facility for performing water treatment. Water treatment refers to, for example, a process of treating water to be processed to meet the water quality for the intended use or discharge reference. The water treatment facility 10 includes two or more chemical tanks 20 and a user device 30. The chemical tanks 20 store chemicals used for water treatment. The chemical tanks 20 are provided with level meters for measuring liquid levels inside the tanks. The liquid level meters periodically measure the liquid levels in the chemical tanks 20 and send the measurement data to the ordering assistance device 40. Regarding the measurement data transmission of the liquid level meters, a data collection configuration can be implemented where the measurement data is accumulated in a data collection terminal (not shown) via a programmable logic controller (PLC) control device, then transmitted and stored in a database of a data storage server (not shown) from the data collection terminal, and transmitted to the ordering assistance device 40 from the data storage server.

The user device 30 is a device used by a worker or a work administrator operating in the water treatment facility 10. The user device 30 is configured by using an information processing device such as a desktop computer, a laptop computer, a tablet terminal, or a smartphone. In response to the user operation, the user device 30 accesses the ordering assistance device 40 to obtain and display on a screen the information about the remaining amount prediction and the ordering plan for each chemical tank 20. Furthermore, in response to the user operation, the user device 30 requests a chemical order according to the order amount with respect to each operator indicated in the ordering plan. The user device 30 may be provided at a location different from the water treatment facility 10 (for example, in a headquarter building or another business location).

The ordering assistance device 40 performs processes such as predicting the remaining amount for each chemical tank 20 and creating an ordering plan based on the measurement data sent from each water treatment facility 10. The ordering assistance device 40 provides assistance information including the information of the remaining amount prediction for each chemical tank 20 and the ordering plan to the corresponding user device 30. The ordering assistance device 40 is configured by using an information processing device such as a personal computer or a management server.

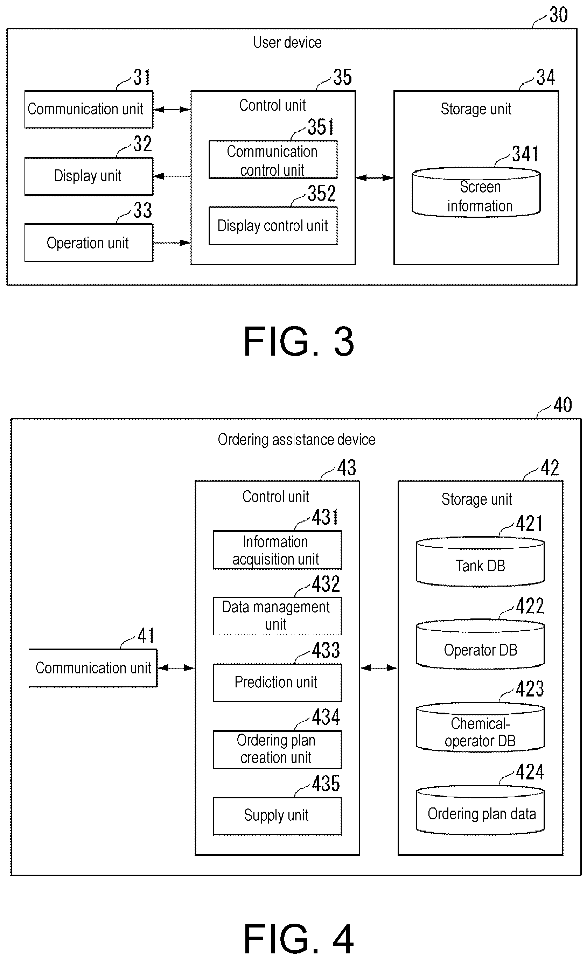

FIG. 3 is a diagram illustrating a configuration example of the user device according to an embodiment. The user device 30 includes a communication unit 31, a display unit 32, an operation unit 33, a storage unit 34, and a control unit 35.

The communication unit 31 communicates with the ordering assistance device 40. For example, the communication unit 31 requests information provision of the chemical ordering plan with respect to the ordering assistance device 40 and receives the information of the chemical ordering plan provided by the ordering assistance device 40.

The display unit 32 is an image display device such as a liquid crystal display or an organic electro luminescence (EL) display. The display unit 32 displays various types of information. For example, the display unit 32 displays information provided by the ordering assistance device 40. The display unit 32 may also be an interface for connecting an image display device to the user device 30. In such case, the display unit 32 generates a video signal for displaying the information provided by the ordering assistance device 40 and outputs the video signal to the image display device connected to the display unit 32 itself.

The operation unit 33 is an input device for inputting a user instruction to the user device 30. The operation unit 33 receives an input such as an information display instruction, an information request instruction. The operation unit 33 is configured by using an existing input device such as a keyboard, a touch panel, or a button. Additionally, the operation unit 33 may also be an interface for connecting an input device to the user device 30. In this case, the operation unit 33 inputs, to the user device 30, an input signal generated in accordance with the user input in the input device.

The storage unit 34 stores screen information 341, etc. The storage unit 34 is configured by using a storage device such as a magnetic storage device or a semiconductor storage device. The screen information 341 is screen information to be displayed on the display unit 32 provided from the ordering assistance device 40. The screen information 341 is, for example, data in the format of hyper text markup language (HTML).

The control unit 35 is configured by using a processor such as a central processing unit (CPU) and a memory. The control unit 35 realizes the functions of a communication control unit 351 and a display control unit 352 by executing a program.

Some or all of the communication control unit 351 and the display control unit 352 may be implemented by hardware (a circuit part; including circuitry) such as an application specific integrated circuit (ASIC), a programmable logic device (PLD), or a field programmable gate array (FPGA), or may be implemented by cooperation between software and hardware. The program may be recorded on a computer readable recording medium. The computer readable recording medium is a non-transitory storage medium such as a portable medium including a flexible disk, a magneto-optical disk, a ROM, a CD-ROM, etc., or a storage device such as a hard disk built into a computer system. The program may also be transmitted via an electrical communication line.

Some of the functions of the communication control unit 351 and the display control unit 352 do not necessarily need to be installed in advance in the user device 30, and may also be realized by installing an additional application program to the user device 30.

The communication control unit 351 controls the communication performed by the user device 30. For example, in accordance with a request instruction input from the operation unit 33, the communication control unit 351 controls the communication unit 31 to request information provision with respect to the ordering assistance device 40.

The display control unit 352 controls the display screen of the display unit 32. For example, in accordance with a display instruction input from the operation unit 33, the display control unit 352 causes information (e.g., assistance information) to be displayed on the display unit 32.

FIG. 4 is a diagram illustrating a configuration example of the ordering assistance device 40 according to an embodiment. The ordering assistance device 40 includes a communication unit 41, a storage unit 42, and a control unit 43.

The communication unit 41 communicates with a communication source of the measurement data, such as a liquid level meter and a data storage server, and the user device 30.

The storage unit 42 stores a tank DB 421, an operator DB 422, a chemical-operator DB 423, and ordering plan data 424, etc. For example, the tank DB 421, the operator DB 422, and the chemical-operator DB 423 for each water treatment facility 10 may be stored in the storage unit 42, or information for all the water treatment facilities 10 may be stored in one tank DB 421, one operator DB 422, and one chemical-operator DB 423. In the following description, it is described with the assumption that the tank DB 421, the operator DB 422, and the chemical-operator DB 423 are stored for each water treatment facility 10. The tank DB 421 is a database in which the information related to the chemical tanks 20 disposed in the water treatment facility is registered, and for example, holds bottom area information for each chemical tank necessary for converting liquid level into chemical amount. The operator DB 422 is a database in which information related to the operators providing the chemicals is registered, and for example, holds information necessary for contact such as the name of the person in charge, phone number, and email address. The chemical-operator DB 423 is a database in which information indicating the relationship between chemicals and operators is registered, and for example, holds information of the names of the operators (manufacturer names) set as ordering destinations for each chemical, such as Company A and Company B for hydrochloric acid, and Company C for caustic soda. The ordering plan data 424 is the data of the ordering plan created by the ordering plan creation unit 434. The storage unit 42 is configured by using a storage device such as a magnetic storage device or a semiconductor storage device.

The control unit 43 is configured by using a processor such as a CPU and a memory. By executing the program, the control unit 43 realizes the functions of an information acquisition unit 431, a data management unit 432, a prediction unit 433, an ordering plan creation unit 434, and a supply unit 435.

Some or all of the information acquisition unit 431, the data management unit 432, the prediction unit 433, the ordering plan creation unit 434, and the supply unit 435 may also be realized by hardware (including circuitry) such as ASICs, PLDs, or FPGAs, or may be realized through cooperation between software and hardware. The program may be recorded on a computer readable recording medium. The computer readable recording medium is a non-transitory storage medium such as a portable medium including a flexible disk, a magneto-optical disk, a ROM, a CD-ROM, etc., or a storage device such as a hard disk built into a computer system. The program may also be transmitted via an electrical communication line.

Some of the functions of the information acquisition unit 431, the data management unit 432, the prediction unit 433, the ordering plan creation unit 434, and the supply unit 435 do not need to be mounted in advance in the ordering assistance device 40, and may also be realized by installing an additional application program in the ordering assistance device 40.

The information acquisition unit 431 acquires various types of information. For example, the information acquisition unit 431 acquires measurement data from the chemical tanks 20 disposed in each water treatment facility 10.

The data management unit 432 manages the data in each database stored in the storage unit 42. For example, in the case where the measurement data are obtained by the information acquisition unit 431, the data management unit 432 updates the information of the database stored in the storage unit 42 according to the obtained information. For example, in the case where the information related to the chemical tank 20 or the operator is registered, the data management unit 432 updates the information in the database stored in the storage unit 42 according to the registered information.

The prediction unit 433, based on the tank DB 421 stored in the control unit 43, predicts the usage of the chemical for each chemical type. For example, the prediction unit 433 uses the measurement data for the past several days stored in the tank DB 421 to predict the daily usage. Furthermore, the prediction unit 433 performs a liquid level remaining amount prediction, assuming that the predicted daily usage continues to be used.

The ordering plan creation unit 434 creates a chemical ordering plan based on the prediction result of the prediction unit 433. Specifically, the ordering plan creation unit 434 creates an ordering plan including the information of the ordering operator, the delivery date and time, and the delivery amount for each of multiple types of chemicals, based on the prediction result of the remaining amounts at multiple time points within a specified period for each of multiple chemical tanks 20 made by the prediction unit 433.

The supply unit 435 provides the user device 30 with screen information including the requested assistance information in accordance with the request from the user device 30. For example, in the case where the user device 30 requests the information of the ordering plan, the supply unit 435 provides the screen information including the ordering plan information created by the ordering plan creation unit 434 to the user device 30. For example, in the case where the user device 30 requests the information of the remaining amount prediction of the chemical tank 20, the supply unit 435 provides the screen information including the remaining amount prediction information of the chemical tank 20 storing the requested chemical to the user device 30.

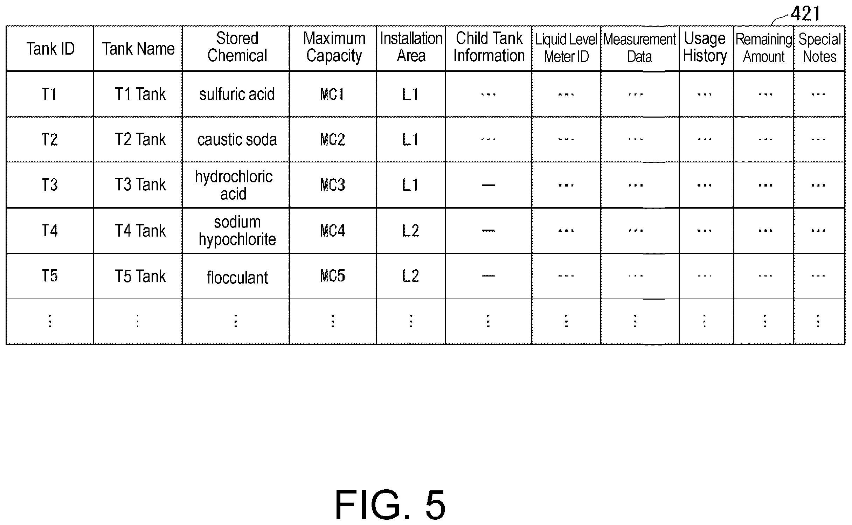

FIG. 5 is a diagram illustrating an example of the tank DB 421 in the embodiment. The tank DB 421 is registered with the information of the tank ID, the tank name, the stored chemical, the maximum capacity, the installation area, the child tank information, the liquid level meter ID, the measurement data, the usage history, the remaining amount, and special notes. The tank ID represents the identification information for identifying the chemical tank 20 in which the chemical is stored. The tank name represents the name of the chemical tank 20 in which the chemical is stored. The stored chemical represents the chemical stored in the chemical tank 20. The maximum capacity represents the maximum capacity that can be stored in the chemical tank 20. The installation area represents the area where the chemical tank 20 is disposed. The installation area information may be information about the building where the chemical tank 20 is installed, or information about a room within the building. Also, the installation area information may also be the area information that divides the site where the water treatment facility is disposed.

The child tank information represents the chemical tank 20 that receives chemical replenishment or supply from a main chemical tank 20. In a large water treatment facility 10, multiple chemical tanks 20 are often installed on different floors or at different locations. Furthermore, there are chemicals that are used after the concentrations of the chemicals are diluted. In such cases, the ordered chemical is not replenished in each chemical tank 20, but is replenished in a specific chemical tank 20 and then distributed to respective chemical tanks 20. A chemical tank 20 that receives replenishment or supply from such specific chemical tank 20 serves as a child tank. It should be noted that child tank information does not need to be registered for all chemical tanks 20. In the case where the child tank information is not registered, it is indicated by "-". The liquid level meter ID represents the identification information for identifying the liquid level meter provided in the chemical tank 20. The measurement data represent time series data of the liquid level measured by the liquid level meter.

The usage history represents the amount of each chemical actually used in the chemical tank 20 on a daily basis. For example, the amount of the chemical actually used per day is calculated based on the difference between the measurement data obtained in one day and the measurement data from the previous day. In the chemical tank 20 registered with child tank information, the usage history is calculated based on the measurement data of the chemical tank 20 registered with child tank information and the measurement data of each chemical tank 20 specified in the child tank information. As described above, in the case where a chemical is distributed from a specific chemical tank 20 to other chemical tanks 20, the remaining amount decreases even if the chemical is not used in the specific chemical tank 20. In the case where a chemical is not used in the other chemical tanks 20 to which chemicals have been distributed from the specific chemical tank 20, the amount of the chemical has not substantially decreased. Therefore, if the usage is calculated only from the measurement data of the specific chemical tank 20, there is a high possibility that an incorrect usage is calculated. When the usage is incorrectly calculated, it may be determined that replenishment is necessary even in the case where replenishment is not actually necessary. As a result, the chemical is ordered earlier than needed. Conversely, it may be determined that replenishment is not necessary even in the case where replenishment is actually necessary. As a result, the chemical runs out, which may cause a significant adverse effect such as water treatment operation stoppage. Therefore, to prevent such issue, it is possible to calculate the actual daily usage of the chemical by calculating the usage of the chemical tank 20 registered with child tank information by taking into account the measurement data of the chemical tank 20 registered with child tank information and each chemical tank 20 specified in the child tank information. In the case where the chemical is to be diluted in the chemical tank 20 specified in the child tank information, the usage is calculated by converting into the concentration at the time of replenishment.

The remaining amount represents the latest remaining amount in the chemical tank 20. Special notes are a factor to be considered at the time of creating the ordering plan and are set in advance by the user. Examples of the special notes may include: in the case of the same chemical is replenished within the same day, a gap of a predetermined time (e.g., 1 to 3 hours) is left, and because it takes time for a chemical replenishment process for a certain chemical, reception of other chemicals may not be performed during the processing time.

Regarding the chemical replenishment process, dilution may be necessary immediately after replenishment depending on chemicals, and time is required for performing dilution after replenishment even after chemical replenishment is completed. In such case, in the area where the chemical tank 20 storing the chemical as the dilution target is disposed, other chemicals may not be received at the time of performing dilution. Therefore, as a special note, by setting that other chemicals may not be received in the area where the chemical tank 20 storing the chemical as the dilution target is disposed during at the time (e.g., 3 hours) of performing dilution, an ordering plan can be created so that no chemical reception is performed at the time of performing dilution. In the example shown in FIG. 5, a "T1 tank" identified by a tank ID "T1", a "T2 tank" identified by a tank ID "T2", and a "T3 tank" identified by a tank ID "T3" are disposed in a same area "L1", and a "T4 tank" identified by a tank ID "T4" and a "T5 tank" identified by a tank ID "T5" are disposed in a same area "L2".

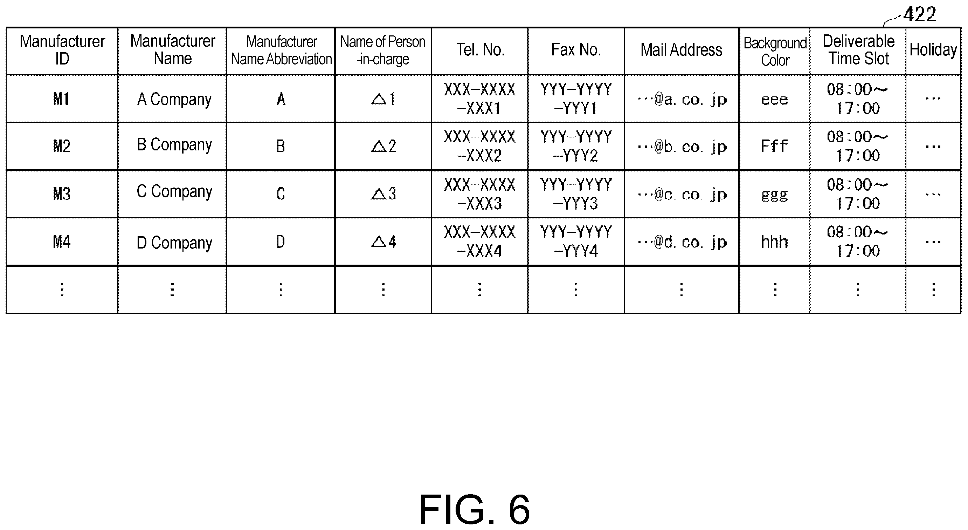

FIG. 6 is a diagram illustrating an example of the operator DB 422 according to an embodiment. The operator DB 422 is registered with the information of the manufacturer ID, the manufacturer name, the manufacturer name abbreviation, the name of the person in charge, the phone number, the fax number, the email address, the background color, the deliverable time slot, and holidays. The manufacturer ID represents the identification information for identifying the operator who delivers the chemical. The manufacturer name represents the name of the operator who delivers the chemical. The manufacturer name abbreviation represents the abbreviated name of the operator who delivers the chemical. The name of the person in charge represents the name of the person in charge from the operator who delivers the chemical. The phone number represents the phone number of the operator who delivers the chemical. The fax number represents the fax number of the operator who delivers the chemical. The email address represents the email address (e.g., the email address of the person in charge) of the operator who delivers the chemical. The background color represents the color for identifying the operator when displaying in the ordering plan document. The available delivery time slot represents the time slot during which the operator who deliver the chemical can deliver the chemical. The holidays represent the holidays of the operator who delivers the chemical.

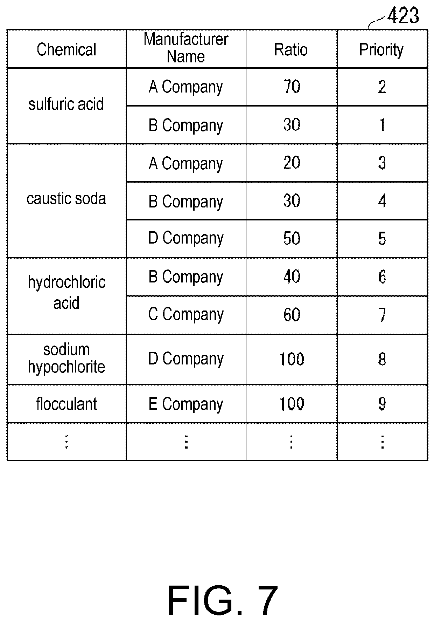

FIG. 7 is a diagram illustrating an example of the chemical-operator DB 423 according to an embodiment. The chemical-operator DB 423 is registered with the information of the chemical, the manufacturer name, the ratio, and the priority. The chemical represent the chemical used for water treatment. The manufacturer name represents the name of the operator who delivers the chemical. The ratio represents the proportion of the order to be requested from the operator who delivers the chemical. For example, the ratio is set so that the total for one chemical becomes 100. The priority is a factor to be considered when creating the ordering plan, and represents the order in which the chemical is preferentially allocated in the ordering plan.

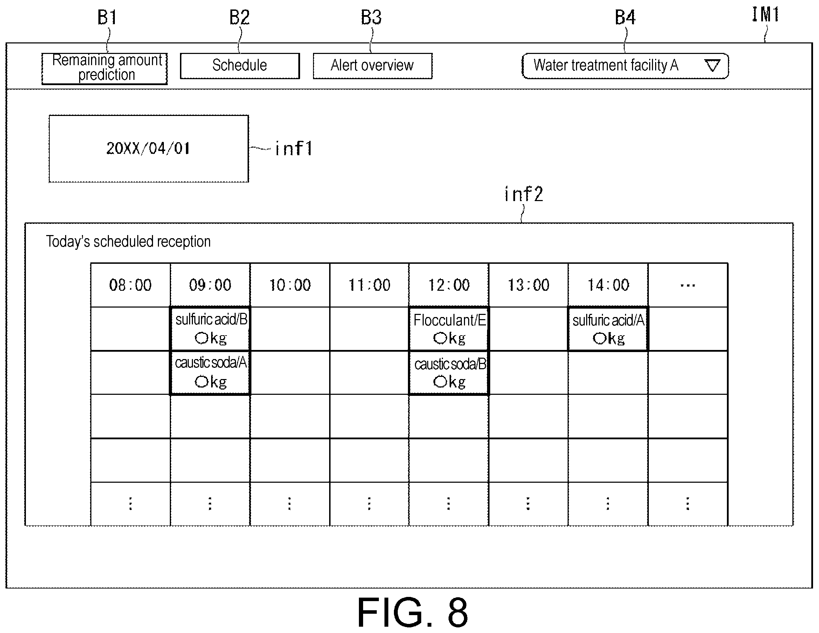

Next, the information displayed on the display unit of the user device 30 is described in accordance with the user operating the user device 30. FIG. 8 is a diagram illustrating an example of a display image IM1 displayed on the display unit 32 of the user device 30 when the ordering assistance device 40 is accessed. The display image IM1 is, for example, a graphic user interface (GUI). The display image IM1 illustrated in FIG. 8 includes, for example, multiple buttons B1 to B4 and information inf1 to inf2.

The button B1 is, for example, a button for switching to a screen to confirm the remaining amount prediction of each chemical tank 20. In the following description, the button B1 is also referred to as a remaining amount prediction confirmation button. For example, when the user selects the button B1, the display image IM1 may display a list of chemicals that are the targets for confirming the remaining amount prediction, and one chemical can be selected. The button B2 is, for example, a button for switching to a screen to confirm the reception schedule (ordering plan) of the chemicals. In the following description, the button B2 is also referred to as a schedule confirmation button. The button B3 is, for example, a button for switching to a screen to confirm alerts. In the following description, the button B3 is also referred to as an alert confirmation button. The button B4 is, for example, a button for selecting the water treatment facility 10. By operating the button B4, the user can select the water treatment facility 10 that the user wishes to confirm. In FIG. 8, it is assumed that the water treatment facility A-10-1 is selected.

The information inf1 represents date information. For example, the information inf1 displays the information of the date on which the user accesses the ordering assistance device 40. The information inf2 represents the information of the chemicals scheduled to be received. For example, the information inf2 displays the information about the chemicals scheduled to be received at the water treatment facility 10 selected by operating the button B4. For example, in FIG. 8, since the water treatment facility A-10-1 is selected, the information inf2 displays the information about chemicals scheduled to be received at the water treatment facility A-10-1. In the following description, it is assumed that water treatment facility A-10-1 is selected.

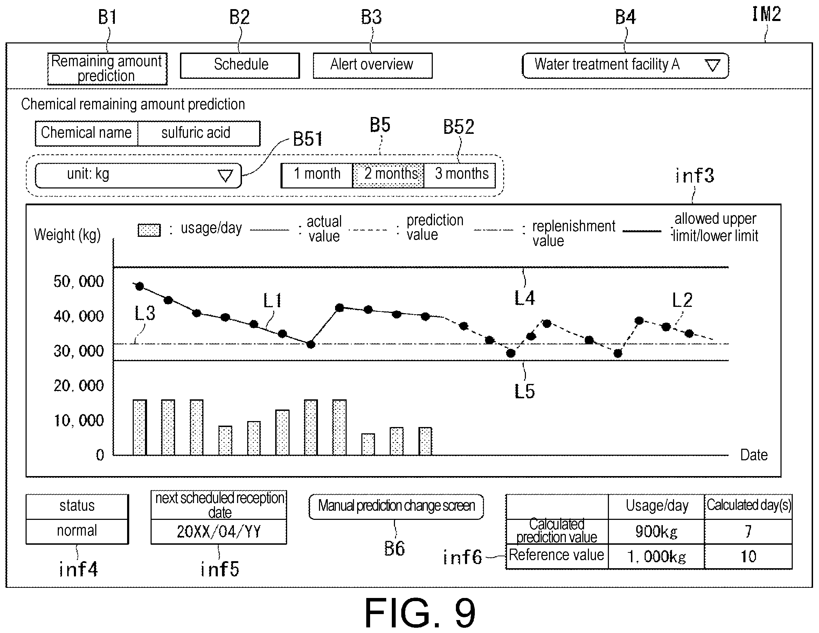

When the button B1 (remaining amount prediction confirmation button) is operated in the display image IM1 as illustrated in FIG. 8, the display image IM2 as illustrated in FIG. 9 is displayed on the display unit 32 of the user device 30. FIG. 9 is a diagram illustrating an example of the display image IM2 for confirming a remaining amount prediction. The display image IM2 is, for example, a GUI. In addition to the buttons B1 to B4, the display image IM2 illustrated in FIG. 9 displays the information about the chemical that is the target of the remaining amount prediction confirmation, buttons B5 to B6, and information inf3 to 6. In FIG. 9, sulfuric acid is shown as the information of the chemical that is the target of the remaining amount prediction. In other words, FIG. 9 displays the information about the remaining amount in the chemical tank 20 (for example, the tank T1) storing sulfuric acid.

The button B5 is, for example, a button for selecting information to be displayed in the information inf3. The button B5 includes buttons B51 and B52. The button B51 is a button for selecting the unit of the chemical tank 20 to be displayed in the information inf3. The unit of the chemical tank 20 to be displayed in the information inf3 includes weight (kg) or length (m). Here, the length represents the length of the chemical tank 20 in the gravity direction. The button B52 is a button for selecting the period of the time series data of the remaining amount of the chemical tank 20 to be displayed in the information inf3. In the example shown in FIG. 9, 1 month, 2 months, and 3 months are shown as the period. However, such duration is merely an example, and the period is not particularly limited.

The information inf3 represents the prediction result of the remaining amount prediction. For example, the information inf3 displays the information of the daily usage rate, the information of the actual remaining amount, and the information of the remaining amount prediction. The information of the actual remaining amount represents the information of the remaining amount of the chemical tank 20 calculated based on the measurement data obtained from the chemical tank 20. In FIG. 9, since "2 months" is selected in button B52, the information inf3 displays the time series data of the remaining amount of the chemical tank 20 for "2 months" (1 month before and after the current day). A line segment L1 displayed in the information inf3 represents the time series data of the actual remaining amount, a line segment L2 represents the time series data of the remaining amount prediction, a line segment L3 represents the replenishment value that serves as the reference for chemical replenishment, a line segment L4 represents the upper limit value of the chemical to be stored in the chemical tank 20, and a line segment L5 represents the lower limit value of the chemical to be stored in the chemical tank 20. The values of the replenishment value, the upper limit value, and the lower limit value may be changed according to the setting.

The information inf4 indicates the presence or absence of an abnormality in the prediction result of the remaining amount prediction and the ordering plan related to the chemical. Here, examples of the abnormality in the prediction result of the remaining amount prediction and the ordering plan include the case where the remaining amount in the chemical tank 20 as a result of the remaining amount prediction falls below the replenishment value, or the case where the capacity of the chemical tank 20 is exceeded due to the replenishment during the period planned in the ordering plan. The information inf4 displays the information indicating a normal status (for example, "Normal") in the case where there is no abnormality. In the case where there is an abnormality, the information inf4 displays information indicating an abnormal status (for example, "minor alert", "intermediate alert", or "severe alert" depending on the severity of the alert). In the case where there is an abnormality, the display image IM2 may also display the number of each alert.

The information inf5 represents the scheduled date for receiving the chemical (delivery of the chemical from the operator). The information in the information inf5 is displayed in the case where the order in the ordering plan is confirmed. The order being confirmed means that an ordering request has been made to the operator. Therefore, no ordering request has been made to the operator at the time when the ordering plan is created. Thus, it is possible that the scheduled date is not displayed in the information inf5 at the stage when the ordering plan is created.

The information inf6 represents the information related to prediction values. The prediction calculation value shown in the information inf6 represents the value used at the time of creating the time series data of the prediction value shown in inf3. The calculated days shown in information inf6 represent the number of past days used to calculate the prediction value, and the usage/day represents the prediction value calculated by using the values of the actual usage of the calculated days. For example, the usage/day may also be the average of the values of the actual usage for the calculated days. Here, it is shown that the prediction value calculated by using the values of the actual usages for 7 days is 900 kg. In addition, the reference value shown in the information inf6 represents the value when the prediction value is calculated by using a different number of days (for example, 10 days or 15 days) from the number of days used to calculate the prediction calculation value. The calculated days may differ for each chemical type.

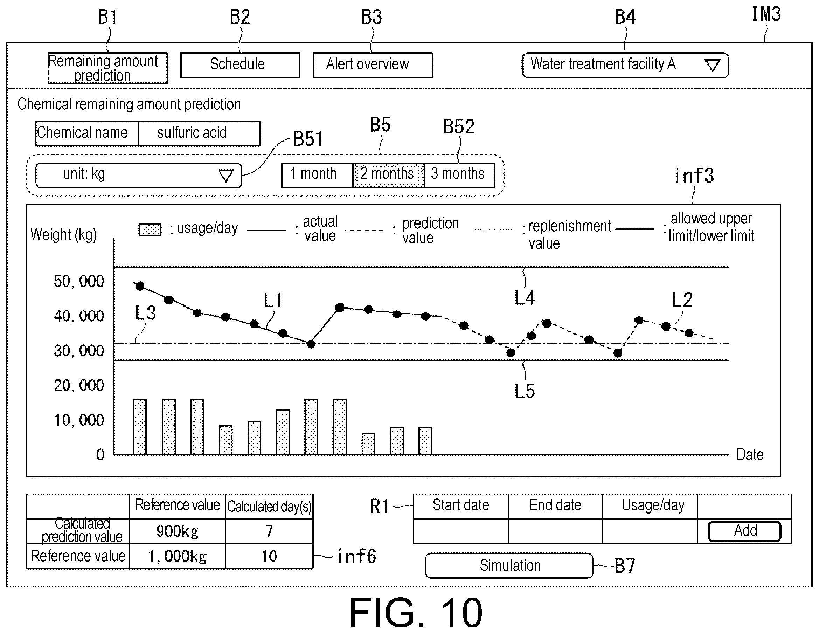

The button B6 is a button for manually changing the prediction value. In the case where it is predicted that the usage may differ significantly compared to the trend of the past usage due to various circumstances such as long holidays or sudden chemical use, it is assumed that the remaining amount prediction based on the past usage may not be accurate. Considering such case, in the case where it is predicted that the usage may differ significantly compared to the trend of the past usage due to various circumstances, the user may also change the remaining amount prediction by manually changing the prediction value by using the button B6. When the button B6 is operated in the display image IM2 illustrated in FIG. 9, the display unit 32 of the user device 30 displays the display image IM3 illustrated in FIG. 10. FIG. 10 is a diagram illustrating an example of the display image IM3 for manually changing the prediction value. The display image IM3 is, for example, a GUI. The display image IM3 illustrated in FIG. 10 displays, in addition to the buttons B1 to B5, the information of the chemical as the target of the remaining amount prediction confirmation, and the information inf3 and the information inf6, an input region R1 and a button B7.

The input region R1 represents a region for inputting a period for which the prediction value is to be changed. The input region R1 includes regions for inputting the start date, the end date, and the usage/day. Via the operation unit 33, the user inputs information corresponding to the period for which the prediction value is to be changed into the regions for the start date and the end date, and inputs the changed prediction value in the region of usage/day. In the case where the prediction values are to be changed for multiple periods, by selecting an add button provided in the input region R1, it is possible to input the information for multiple periods.

The button B7 is a button for executing remaining amount prediction simulation again based on the information input to the input region R1. When the button B7 is selected by the user, the prediction unit 433 of the ordering assistance device 40 executes remaining amount prediction simulation again based on the information input to the input region R1. For example, the prediction unit 433 performs the remaining amount prediction simulation by using, as the prediction value input to the usage/day, the prediction value of the time series data of the remaining amount for the period (specific period) specified by the start date and the end date. The user may modify the ordering plan based on the result of the modified simulation. Accordingly, it is possible to cope with the situation in the case where it is predicted that the usage may differ significantly from the trend of the past usage.

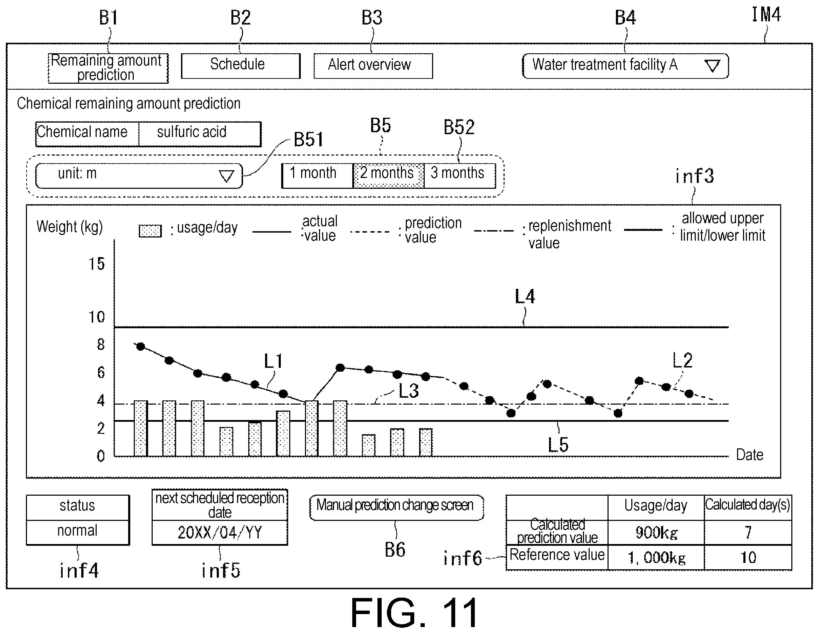

In the display image IM2 illustrated in FIG. 9 or the display image IM3 shown in FIG. 10, when the user switches the unit in the button B51 from weight (kg) to length (m), the display image IM4 illustrated in FIG. 11 is displayed on the display unit 32 of the user device 30. FIG. 11 is a diagram illustrating an example of the display image IM4 for confirming a remaining amount prediction. The display image IM4 is, for example, a GUI. In the display image IM4 illustrated in FIG. 11 the display of the information inf3 is changed as compared to the display image IM2 illustrated in FIG. 9. Specifically, in the display image IM4, the vertical axis is changed to display height (m), and the time series data of the remaining amount transition (actual and predicted) corresponding to the height of the chemical tank 20 is displayed. In this way, by displaying the time series data of the transition of the remaining amount corresponding to the height of the chemical tank 20, it is possible to provide information of the remaining amount in the chemical tank 20 by another means for users who find it difficult to understand the remaining amount in the chemical tank 20 with the display of weight.

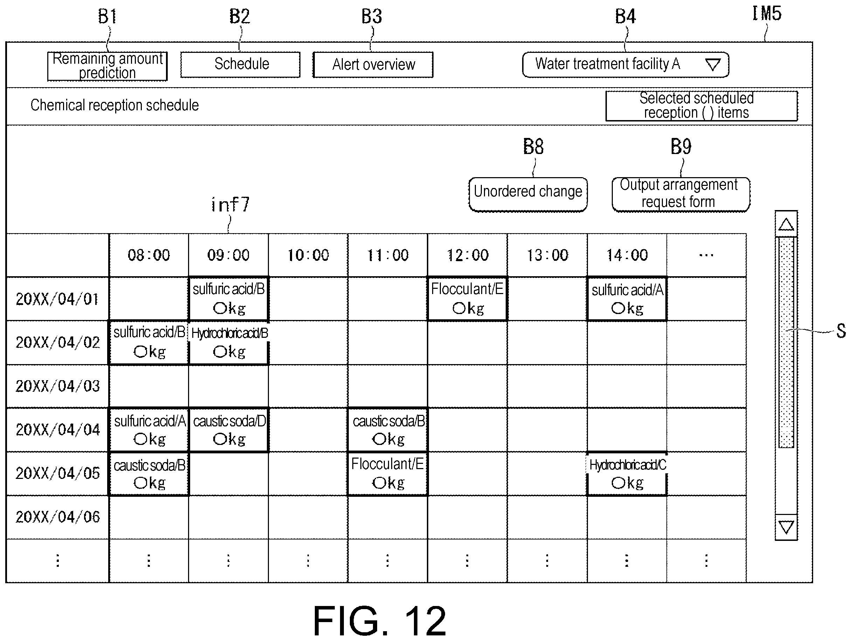

When the button B2 (schedule confirmation button) is operated in any of the display images IM1 to IM4 shown in FIG. 8 to FIG. 11, the display image IM2 shown in FIG. 12 is displayed on the display unit 32 of the user device 30. FIG. 12 is a diagram illustrating an example of the display image IM5 for confirming a chemical reception schedule. The display image IM5 is, for example, a GUI. The display image IM5 shown in FIG. 12 displays, for example, buttons B8 to B9 and information inf7 in addition to the buttons B1 to B4.

The information inf7 represents the ordering plan. For example, the information inf7 displays the information of the ordering plan created by the ordering plan creation unit 434. The user can display further the ordering plan further ahead by operating the slider S. The button B8 is, for example, a button for changing the ordering plan related to the unordered chemical in the ordering plan displayed in the information inf7. The user selects the button B8 in the case where the ordering plan displayed in the information inf7 is to be confirmed and the order date and time of the unordered chemical are to be modified. After selecting the button B8, the user changes the order date and time of the unordered chemical by moving the information of the unordered chemical whose order date and time are to be changed to another date and time. When the order date and time of the unordered chemical is changed by the user, the changed information is notified to the ordering assistance device 40. The ordering plan creation unit 434 of the ordering assistance device 40 determines whether any issue may occur for the changed order date and time. If an issue occurs, the ordering assistance device 40 notifies the user device 30 with an alert (including the kind of issue that occurs). If no issue occurs, the ordering plan creation unit 434 stores the data of the ordering plan after change in the storage unit 42.

The button B9 is, for example, a button for confirming with the administrator whether it is acceptable to make an order request to the operator according to the ordering plan. The user selects the button B9 in the case where the user is to confirm with the administrator whether it is acceptable to make an order request to the operator according to the ordering plan displayed in the information inf7. When the button B9 is selected by the user, the ordering assistance device 40 notifies the user device 30 operated by the administrator, of the information of the ordering plan displayed in the information inf7. It may also be that the ordering assistance device 40 does not notify the administrator, of the information that an order request has been made in the information of the ordering plan displayed in the information inf7. Subsequently, when the administrator approves the order request, an order request for the chemical is made to the operator. The ordering assistance device 40 may also be configured so that the information that the order has been requested, among the information of the ordering plan displayed in the information inf7, cannot be changed. The information of the ordering plan created by the ordering plan creation unit 434 is stored in the storage unit 42 as ordering plan data 424.

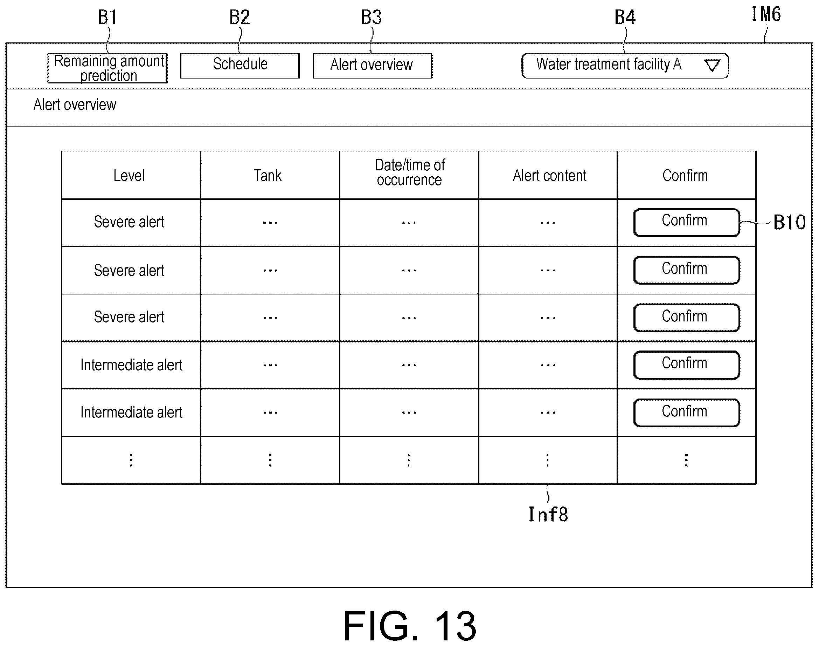

When the button B3 (alert confirmation button) is operated in any of the display images IM1 to IM4 shown in FIG. 8 to FIG. 11, the display image IM6 shown in FIG. 13 is displayed on the display unit 32 of the user device 30. FIG. 13 is a diagram illustrating an example of the display image IM6 for confirming an alert. The display image IM6 is, for example, a GUI. The display image IM6 illustrated in FIG. 13 displays information inf8 in addition to the buttons B1 to B4, for example.

The information inf8 represents a list of alerts. For example, the information inf8 displays the chemical tank 20 that is the subject of the alert, the date and time of occurrence, the content of the alert, and a confirm button B10, in the order of alert level. By viewing the information inf8, the user can understand in which chemical tank 20 an alert has occurred. The confirm button B10 is a button for confirming the content of the alert that is the subject of the warning. When the user selects the confirm button B10, the information that is the subject of the warning is displayed on the display unit 32 of the user device 30. For example, a display image of the corresponding location may be displayed on the display unit 32 of the user device 30.

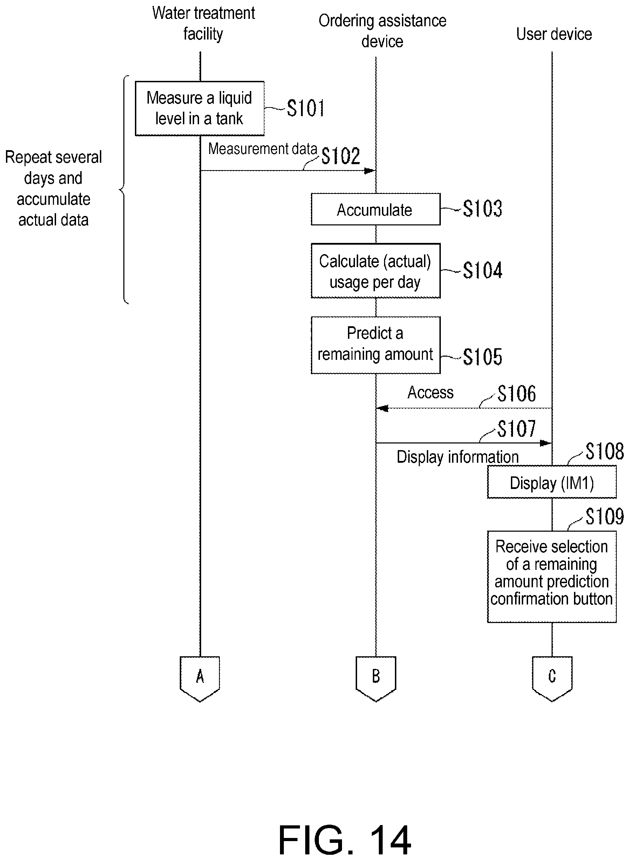

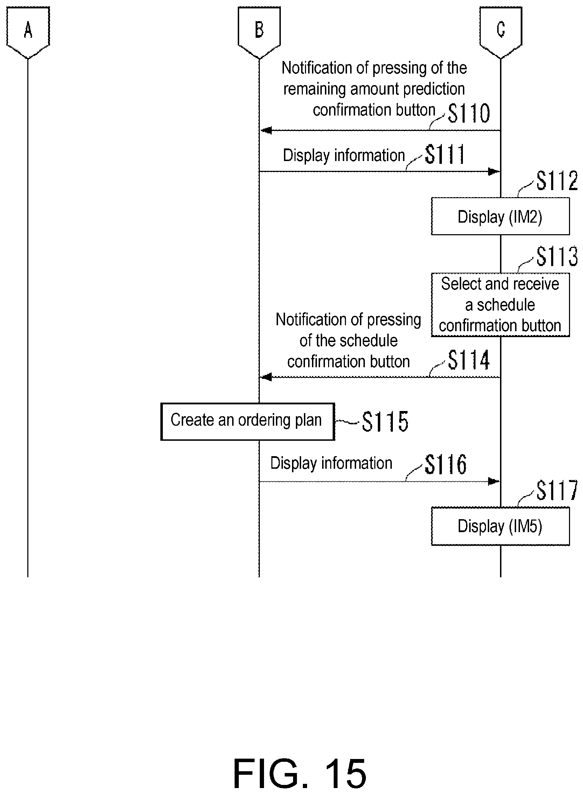

FIGs. 14 and 15 are sequence diagrams illustrating a processing flow in the chemical ordering assistance system 100 according to the embodiment. In the description of FIG. 14 and FIG. 15, the case where the ordering assistance device 40 collects measurement data from one water treatment facility 10 (for example, water treatment facility A-10-1) is described as an example.
Each liquid level meter in the water treatment facility A-10-1 measures the liquid level inside the chemical tank 20 connected to the device itself (Step S101). The information of the liquid level inside the chemical tank 20 measured by each liquid level meter is transmitted, as measurement data, for example, to the ordering assistance device 40 from a data collection terminal (Step S102). At this time, the measurement data of each liquid level meter is transmitted to the ordering assistance device 40 associated with the identification information (liquid level meter ID) of the own meter. The communication unit 41 of the ordering assistance device 40 receives the measurement data of each liquid level meter that has been transmitted. The information acquisition unit 431 acquires the measurement data received by the communication unit 41.

The data management unit 432 accumulates the measurement data acquired by the information acquisition unit 431 in the storage unit 42 (Step S103). Specifically, the data management unit 432 reads out the tank DB421 stored in the storage unit 42. Next, the data management unit 432 refers to the liquid level meter ID of the read tank DB421, and selects a record corresponding to the liquid level meter ID associated with the measurement data acquired by the information acquisition unit 431. The data management unit 432 accumulates, in chronological order, the measurement data acquired by the information acquisition unit 431 in the item of the measurement data of the selected record. The data management unit 432 repeatedly executes the process of Step S103 every time when the information acquisition unit 431 acquires measurement data. In this way, the data management unit 432 accumulates the measurement data acquired from the liquid level meter provided in each chemical tank 20.

At a predetermined time (for example, 0:00), the data management unit 432 calculates the daily usage for each chemical tank 20 by using the measurement data accumulated in the item of the measurement data of the tank DB421 (Step S104). The data management unit 432 accumulates the information of the calculated daily usage of each chemical tank 20 in chronological order in the item of the usage history corresponding to each chemical tank 20 in the tank DB421. As a result, in the item of the usage history of the tank DB421, the information of the daily usage for each chemical tank 20 accumulates. By repeatedly executing the process from Step S101 to Step S104 for several days, the information of the daily usage for each chemical tank 20 accumulates for several days in the item of the usage history of the tank DB421.

The prediction unit 433 performs a remaining amount prediction for each chemical tank 20 based on the information of the daily usage that has accumulated for several days in the item of the usage history of the tank DB421 (Step S105). For example, the prediction unit 433 acquires the information of the daily usage that has accumulated for several days in the item of the usage history of the record and corresponds to the tank name "T1 tank" in the tank DB421. The prediction unit 433 estimates the daily usage by using the information of the daily usage for several days as acquired. The estimated value becomes the prediction value. The prediction unit 433 continues to subtract the estimated prediction value from the actual remaining amount of the chemical in the chemical tank 20 of the tank name "T1 tank" to perform the remaining amount prediction. In addition, when the chemical is replenished into the chemical tank 20 of "T1 tank", the prediction unit 433 again continues to subtract the estimated prediction value from the remaining amount of the chemical in the chemical tank 20 of "T1 tank" after replenishment to perform the remaining amount measurement. In this way, the prediction unit 433 performs the remaining amount prediction for each chemical tank 20.

The user operates the user device 30 to access the ordering assistance device 40 (Step S106). In response to the access, the supply unit 435 of the user device 30 provides display information to the user device 30, the display information serving to display the display image IM1 shown in FIG. 8 (Step S107). The communication unit 31 of the user device 30 receives the display information transmitted from the ordering assistance device 40. The display control unit 352 of the user device 30 interprets the display information received by the communication unit 31, so as to display the display image IM1 on the display unit 32 (Step S108). To check the remaining amount of the chemical tank 20 storing a certain chemical (for example, sulfuric acid), the user operates the user device 30 to select (press) the button B1 displayed in the display image IM1 (Step S109). When the button B1 displayed on the display image IM1 is selected by the user, the user device 30 notifies the ordering assistance device 40 that the remaining amount prediction confirmation button is pressed (Step S110).

The supply unit 435 of the ordering assistance device 40, in response to the notification of the remaining amount prediction confirmation button being pressed, provides display information for displaying the display image IM2 as illustrated in FIG. 9 to the user device 30, for example (Step S111). Specifically, the supply unit 435 refers to the tank DB421 and acquires the usage history and the remaining amount information of the chemical tank 20 storing the chemical selected by the user, and the result of the remaining amount prediction performed by the prediction unit 433. The supply unit 435 provides the display information for displaying the display image IM2 as illustrated in FIG. 9 to the user device 30 by using each acquired information.

The communication unit 31 of the user device 30 receives the display information transmitted from the ordering assistance device 40. The display control unit 352 of the user device 30 interprets the display information received by the communication unit 31, so as to display the display image IM2 on the display unit 32 (Step S112). As a result, the result of remaining amount prediction for a certain chemical is displayed on the display unit 32 of the user device 30. Next, to create the ordering plan for the chemical, the user operates the user device 30 to select (press) the button B2 displayed on the display image IM2 (Step S113). When the button B2 displayed on the display image IM2 is selected by the user, the user device 30 notifies the ordering assistance device 40 that the schedule confirmation button is pressed (Step S114).

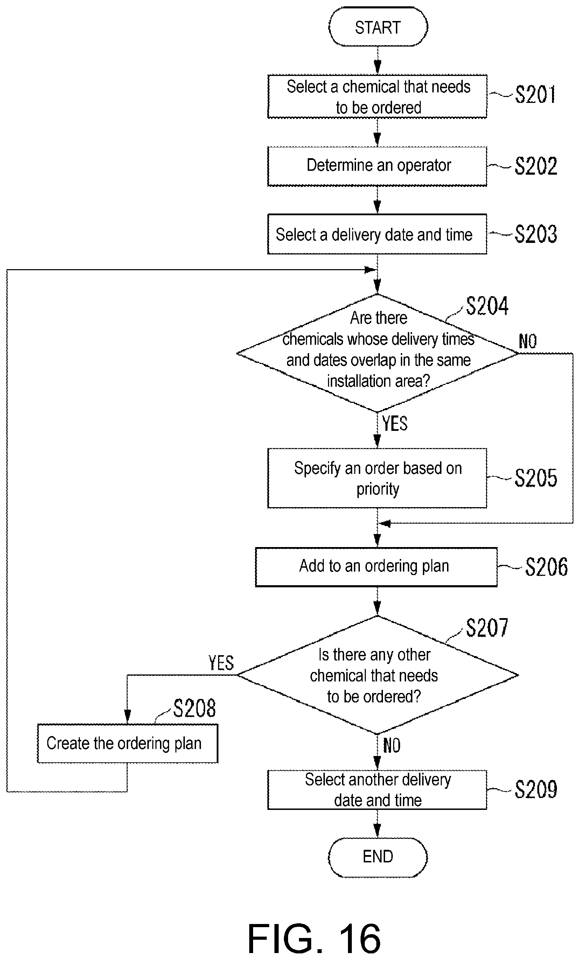

The ordering plan creation unit 434 of the ordering assistance device 40, in response to the notification of the schedule confirmation button being pressed, creates the ordering plan by using each database stored in the storage unit 42 (Step S115). The specific method for creating the ordering plan is described with reference to FIG. 16. The supply unit 435 provides the user device 30 with the display information for displaying the display image IM5 including the created ordering plan (Step S116). The communication unit 31 of the user device 30 receives the display information transmitted from the ordering assistance device 40. The display control unit 352 of the user device 30 interprets the display information received by the communication unit 31 to display the display image IM5 on the display unit 32 (Step S117).

FIG. 16 is a flowchart illustrating the flow of an ordering plan creation process performed by the ordering assistance device according to the embodiment.
The ordering plan creation unit 434 selects a chemical that needs to be ordered based on the result of the remaining amount prediction (Step S201). Specifically, the ordering plan creation unit 434 selects a chemical that has dropped below the replenishment value as a result of the remaining amount prediction as the chemical that needs to be ordered. Next, the ordering plan creation unit 434 refers to the chemical-operator DB423 to select the operator to which an order request is to be made for each selected chemical that needs to be ordered (Step S202). At this time, the ordering plan creation unit 434 selects the operator to which an order request is to be made in accordance with the ratio of the chemical-operator DB423. For example, in the case of requesting 10,000 kg of sulfuric acid, the ordering plan creation unit 434 selects the operators, so that an order request of 7,000 kg of sulfuric acid is made to Company A and 3,000 kg of sulfuric acid is made to Company B.

The ordering plan creation unit 434 selects the delivery date and time for each chemical for which the operator has been selected (Step S202). For example, regarding the delivery date, the ordering plan creation unit 434 selects, as the delivery date, the timing when the result of the remaining amount prediction has dropped below the replenishment value for each chemical. For example, regarding the delivery time, the ordering plan creation unit 434 selects, for each chemical, a time slot that the operator is able to deliver in the delivery date and an open time slot. Here, the open time slot refers to a time slot for which no order request has been made in the ordering plan. As the for the chemical with information as a special that specifies a time slot so as to deliver at an early time slot note, the ordering plan creation unit 434 selects the time slot based on the special note.

The ordering plan creation unit 434 determines whether there are different types of chemicals in the same installation area with delivery dates and times that at least partially overlap, based on the delivery date and time for each selected chemical and the tank DB421 (Step S204). In the tank DB421 shown in FIG. 5, sulfuric acid, caustic soda, and hydrochloric acid are chemicals of which chemical tanks 20 are disposed in the same installation area and chemical types are different. As an example, in the case where sulfuric acid and caustic soda are selected as the chemicals that need to be ordered in the process of Step S101 and the delivery dates and times for sulfuric acid and caustic soda partially overlap, the ordering plan creation unit 434 determines that there are different types of chemicals in the same installation area with delivery dates and times that at least partially overlap. On the other hand, as an example, if sulfuric acid and caustic soda are selected as chemicals that need to be ordered in the process of Step S101, and the delivery dates and times for sulfuric acid and caustic soda do not overlap, the ordering plan creation unit 434 determines that there are no different types of chemicals in the same installation area with delivery dates and times that at least partially overlap.

In the case where the ordering plan creation unit 434 determines that there are different types of chemicals in the same installation area with delivery dates and times that at least partially overlap (Step S204-YES), the ordering plan creation unit 434 specifies the order for adding to the ordering plan based on the priority in the chemical-operator DB423 (Step S205). As in the example mentioned above, in the case where the delivery dates and times for sulfuric acid and caustic soda partially overlap, sulfuric acid has a higher priority than caustic soda. Therefore, the ordering plan creation unit 434 sets the order of adding sulfuric acid to the ordering plan prior to that of adding caustic soda. As a result, sulfuric acid is determined with the delivery date and time selected in the process of Step S203, and caustic soda cannot be added to the overlapping time slot. Hence, delivery at a different time slot is requested.

The ordering plan creation unit 434 adds the chemical whose operator and delivery date and time are determined to the ordering plan (Step S206). Subsequently, the ordering plan creation unit 434 determines whether there is any other chemical that needs to be ordered (Step S207). For example, as mentioned above, among the different types of chemicals in the same installation area whose delivery dates and times at least partially overlap, the chemical with a lower priority (chemical compared but not selected) has not been added to the ordering plan. Therefore, the ordering plan creation unit 434 determines that there is another chemical that needs to be ordered in the case where there is a chemical that is compared but not selected. Meanwhile, the ordering plan creation unit 434 determines that there is no other chemical that needs to be ordered if there is no chemical that is compared but not selected as mentioned above.

In the case where the ordering plan creation unit 434 determines that there is another chemical that needs to be ordered (Step S207-YES), the ordering plan creation unit 434 selects another delivery date and time for each of the another chemical that needs to be ordered (Step S208). For example, the ordering plan creation unit 434 selects, as the another delivery date and time, a time slot that the operator is able to deliver and an open time slot, which is a timing when the remaining amount prediction result has dropped below the replenishment value. Subsequently, the ordering plan creation unit 434 executes the process from Step S204 onwards. In the process of Step S204, in the case where the ordering plan creation unit 434 determines that there are no different types of chemicals in the same installation area with delivery dates and times that at least partially overlap (Step S204-NO), the ordering plan creation unit 434 executes the process of Step S206.

In the case where the ordering plan creation unit 434 determines that there is no other chemical that needs to be ordered (Step S207-NO), the ordering plan creation unit 434 creates an ordering plan (Step S209). Specifically, the ordering plan creation unit 434 creates an order request added with information of the chemicals to be ordered as the final order request.

The chemical ordering assistance system 100 configured as the above enables more efficient assistance in ordering chemicals used in water treatment. Specifically, by using the chemical ordering assistance system 100, prediction is made on the remaining amounts at multiple time points within a specified period for each of the chemical tanks 20 that store multiple types of chemicals used for water purification based on the measurement data of the liquid level representing the remaining amount in each of the multiple chemical tank 20, and an ordering plan for multiple types of chemicals is created based on the prediction results of the remaining amounts at multiple time points within the specified period for each of the chemical tanks 20, and the information of the created ordering plan is provided to the user device 30, which is the requester. In this way, by using the chemical ordering assistance system 100, an ordering plan taking into account the prediction results of the remaining amounts of the chemical tanks 20 storing multiple types of chemicals is created. Therefore, it is possible to order chemicals according to the usages of the respective chemicals and order chemicals in advance. Furthermore, the chemical ordering assistance system 100 creates an ordering plan including the information of the ordering operator determined for each chemical to be ordered. Additionally, by using the chemical ordering assistance system 100, an ordering plan is created so that the capacity of each chemical tank 20 is not exceeded. Thus, the chemical ordering assistance system 100 can create an ordering plan that takes into account all the four issues mentioned as conventional issues. Moreover, the user only needs to confirm the created ordering plan, so it is not necessary to carry out the process from prediction of chemicals to arrangement preparation. As a result, it becomes possible to provide more efficient assistance in ordering chemicals used in water treatment.

Furthermore, the installation area information is associated with each chemical tank 20 in the ordering assistance device 40. When creating an ordering plan, in the case where the replenishment of different types of chemicals occurs in the same area and time slot, the ordering assistance device 40 determines which chemical to be added to the ordering plan by using the priority set in advance, and creates the ordering plan so that the replenishment of different types of chemicals does not occur in the same area and time slot. Accordingly, overlapping or congestion is prevented at the reception timing of large chemical delivery vehicles (tankers). As a result, efficient replenishment of chemicals becomes possible.

Furthermore, for chemicals that require multiple replenishments within the same day, the ordering assistance device 40 sets the interval between the first and second chemical replenishments in advance and creates an ordering plan accordingly. Accordingly, multiple chemical replenishments within the available delivery time slots for large chemical delivery vehicles (tankers) on the same day are possible. As a result, efficient replenishment of chemicals becomes possible.

Furthermore, in the chemical ordering assistance system 100, special notes are added for chemicals that require time for a process in addition to the time needed for replenishment, such as chemical types that need to be diluted to be homogenized immediately after replenishment. The ordering assistance device 40 creates an ordering plan taking the special notes into consideration. Accordingly, it is possible to create an ordering plan that ensures no reception of large chemical delivery vehicles (tankers) occurs during the time when a process other than replenishment is being performed. As a result, efficient replenishment of chemicals becomes possible.

### <Modified Example 1>

The ordering plan creation unit 434 of the ordering assistance device 40 may create an ordering plan to distribute chemicals in multiple chemical tanks 20 storing the same type of chemical within the same water treatment facility 10, in a situation where the chemical tank 20 is small or when the remaining amount in the chemical tank 20 is high and there is insufficient empty capacity, in the case where there is another chemical tank 20 storing the same type of chemical in the same water treatment facility 10. With such configuration, it is possible to reduce the delivery cost by having a large amount of chemicals delivered by using a large chemical delivery vehicle (tanker) capable of transporting a large volume of chemical. Furthermore, it is possible to achieve a near-full replenishment state before a period when chemical replenishment stops for several days, such as before consecutive holidays.

### <Modified Example 2>

In the water treatment facility 10, the water treatment load and the water treatment operation rate are constantly changing. Therefore, the ordering assistance device 40 may be configured to check a predetermined number of times per day (for example, 1 to 4 times) by using actual plan data after creating the ordering plan to confirm whether abnormal situations such as chemical shortages or chemical replenishment overages may occur even if chemical arrangement follows the plan. In the case where a chemical that may cause an abnormal situation is detected, the ordering assistance device 40 may be configured to simply notify the user device 30 of an alert (the information including which chemical for which the arrangement plan should be reviewed). Additionally, the ordering assistance device 40 may automatically revise the ordering plan to avoid an abnormal situation in response to predicting such situation, and notify the user device 30 of the revision as an alert.

The invention has been described in detail with reference to the drawings for the embodiments. However, the specific configuration is not limited to the embodiments, and includes designs within the scope that do not deviate from the essence of the invention.

### Industrial Applicability

The invention can be applied when ordering chemicals used for water treatment.

### Reference Signs List

10...water treatment facility; 20...chemical tank; 30...user device; 40...ordering assistance device; 31, 41...communication unit; 32...display unit; 33...operation unit; 34, 42...storage unit; 35, 43...control unit; 351...communication control unit; 352...display control unit; 421...tank DB; 422...operator DB; 423...chemical-operator DB; 431...information acquisition unit; 432...data management unit; 433...prediction unit; 434...ordering plan creation unit; 435...supply unit.

## Claims

1. An ordering assistance device, comprising:
a communication unit that receives, from one or more water treatment facilities comprising a plurality of chemical tanks, measurement data of a liquid level representing a remaining amount of each of the chemical tanks, the chemical tanks storing a plurality of types of chemicals used for water purification;
a prediction unit that predicts the remaining amounts at a plurality of time points within a prescribed period for each of the chemical tanks, based on the measurement data that are received;
an ordering plan creation unit that, based on prediction results for the remaining amounts at the time points within the prescribed period for each of the chemical tanks, creates an ordering plan that comprises information about an ordering company, a delivery date and time, and a delivery amount for each of the types of chemicals; and
a supply unit that provides, to a request source, information about the ordering plan created by the ordering plan creation unit.

2. The ordering assistance device as claimed in claim **1,** wherein information of an installation area is associated with each of the chemical tanks, and
the ordering plan creation unit creates the ordering plan so that, at a time of creating the ordering plan, in a case where replenishments of chemicals of different types occur in a same area and a same time slot, which chemical to add to the ordering plan is determined by prioritizing based on a priority set in advance and the replenishments of the chemicals of different types do not occur in the same area and the same time slot.

3. The ordering assistance device as claimed in claim 1 or 2, wherein child tank information representing that, in a chemical tank, a chemical is distributed and replenished from another chemical tank is associated with one or some of the chemical tanks, and
in a case of predicting the remaining amounts at the time points within the prescribed period for the chemical tank associated with the child tank information, the predicting unit predicts the remaining amounts at the time points within the prescribed period for the chemical tank associated with the child tank information based on the measurement data obtained from the chemical tank associated with the child tank information and the measurement data obtained from a chemical tank indicated by the child information.

4. The ordering assistance device as claimed in claim 1 or 2, wherein the ordering plan creation unit creates the ordering plan, so that for a chemical for which chemical replenishments of multiple times within a same day are required, a predetermined time is set between an interval of the chemical replenishments.

5. The ordering assistance device as claimed in claim 1 of 2, wherein the ordering plan creation unit creates the ordering plan, so that, for a chemical requiring time for a process other than time required for replenishment, chemical delivery is not performed when the process other than the time required for replenishment is being performed.

6. The ordering assistance device as claimed in claim 1 or 2, wherein, after predicting the remaining amounts at the time points within the prescribed period for each of the chemical tanks, in a case of receiving an instruction of changing a prediction value of the remaining amount at an arbitrary time point in a specific period within the prescribed period, the prediction unit predicts the remaining amount following the specific period by taking into consideration the prediction value that is changed.

7. A chemical ordering assistance system, comprising:
one or more water treatment facilities comprising a plurality of chemical tanks storing a plurality of types of chemicals used for water purification;
a communication unit that receives, from the one or more water treatment facilities, measurement data of a liquid level representing a remaining amount of each of the chemical tanks;
a prediction unit that predicts the remaining amounts at a plurality of time points within a prescribed period for each of the chemical tanks, based on the measurement data that are received;
an ordering plan creation unit that, based on prediction results for the remaining amounts at the time points within the prescribed period for each of the chemical tanks, creates an ordering plan that comprises information about an ordering company, a delivery date and time, and a delivery amount for each of the types of chemicals; and
a supply unit that provides, to a request source, information about the ordering plan created by the ordering plan creation unit.

8. A chemical ordering assistance method, comprising:
receiving, from one or more water treatment facilities comprising a plurality of chemical tanks, measurement data of a liquid level representing a remaining amount of each of the chemical tanks, the chemical tanks storing a plurality of types of chemicals used for water purification;
predicting the remaining amounts at a plurality of time points within a prescribed period for each of the chemical tanks, based on the measurement data that are received;
based on prediction results for the remaining amounts at the time points within the prescribed period for each of the chemical tanks, creating an ordering plan for the types of chemicals; and
providing, to a request source, information about the ordering plan that is created.
